# EUROPÄISCHE PATENTSCHRIFT

(11) **EP 1 203 442 B1**
(45) Veröffentlichungstag und Bekanntmachung des Hinweises auf die Patenterteilung: **07.02.2007**
(21) Anmeldenummer: 00963900.6
(22) Anmeldetag: 11.08.2000
(51) Int. Cl.: H02P 1/02

(54) **KOMBINATION EINES SCHÜTZES MIT EINEM SANFTANLASSER**
COMBINED CONTACTOR/SOFT STARTER
COMBINAISON D'UN CONTACTEUR-DISJONTEUR ET D'UN DEMARREUR POUR DEMARRAGE EN DOUCEUR

(30) Priorität: 12.08.1999 DE 19938113
(43) Veröffentlichungstag der Anmeldung: 08.05.2002
(73) Patentinhaber: SIEMENS AKTIENGESELLSCHAFT, 80333 München (DE)
(72) Erfinder: BUSCH, Klaus, 92224 Amberg (DE)
(86) Internationale Anmeldenummer: PCT/DE2000/002709
(87) Internationale Veröffentlichungsnummer: WO 2001/013506

(56) Entgegenhaltungen:
- EP-A- 0 088 200
- EP-A- 0 375 261
- DE-A- 3 526 803
- US-A- 3 988 709

## Beschreibung

Die vorliegende Erfindung betrifft eine Kombination eines Schützes mit einem Sanftanlasser.

In der elektrischen Antriebstechnik werden zur Schonung von Motoren und mechanischen Antriebselementen wie beispielsweise Getrieben oder Keilriemen oftmals zusätzlich zu einer Schützsteuerung elektronische Sanftanlasser eingesetzt. Bei Verwendung dieser Sanftanlasser ergibt sich als weiterer Vorteil eine Reduzierung von Stromspitzen beim Anlassen von Drehstrommotoren.

Die bekannten Sanftanlasser sind eigenständige Geräte, die separat in Schaltschränken montiert werden. Die Verbindung mit anderen Schaltgeräten (Schütz, Leistungsschalter, Überlastrelais) zu einem Motoräbzweig erfolgt über elektrische Leitungen.

Ein wichtiges Kostenkriterium für den Anwender ist der Platzbedarf, den die Schaltgeräte eines Motorabzweigs im Schaltschrank benötigen. Hierbei ist die Breite das entscheidende Kriterium.

Die Aufgabe der vorliegenden Erfindung besteht darin, die Schaltgeräte eines Motorabzweigs auf einem minimalen Raum in einem Schaltschrank anzuordnen.

Die Aufgabe wird dadurch gelöst, daß der Sanftanlasser auf das Schütz aufmontiert ist.

Denn dadurch ergibt sich eine bauliche Einheit von Sanftanlasser und Schütz, welche lediglich die Breite des Schützes benötigt.

Die Montage des Sanftanlassers auf das Schütz kann beispielsweise dadurch erfolgen, daß das Schütz eine Montageseite und eine der Montageseite gegenüberliegende Bedienseite aufweist, das Schütz mit der Montageseite auf einem Halteelement befestigbar ist und der Sanftanlasser auf der Bedienseite des Schützes angeordnet ist.

Das Verbinden des Schützes mit dem Sanftanlasser ist besonders einfach, wenn das Schütz und der Sanftanlasser zusammenwirkende Hakelemente aufweisen, mittels derer der Sanftanlasser an dem Schütz gehalten ist.

Wenn das Schütz und der Sanftanlasser zusammenwirkende Rastelemente aufweisen, bei deren Betätigung der Sanftanlasser von dem Schütz lösbar ist, ist der Sanftanlasser auf einfache Weise wieder vom Schütz lösbar.

Wenn das Schütz und der Sanftanlasser zusammenwirkende Versorgungskontaktelemente aufweisen, mittels derer der Sanftanlasser über das Schütz mit elektrischer Energie versorgbar ist, müssen zur Stromversorgung des Sanftanlassers keine eigenen Leitungen verlegt werden.

Wenn das Schütz und der Sanftanlasser zusammenwirkende Lastkontaktelemente aufweisen, mittels derer mindestens eine Laststromleitung von dem Schütz zum Sanftanlasser geschlossen wird, kann auch eine eigene Verlegung von Lastleitungen zwischen Schütz und Sanftanlasser entfallen.

Wenn das Schütz ein dreiphasiges Drehstromnetz an eine Drehstromlast anschaltet und der Sanftanlasser als einphasiger Sanftanlasser ausgebildet ist, mittels dessen nur eine Phase des Drehstromnetzes beeinflußbar ist, kann bei separat verlegten Lastleitungen der Verdrahtungsaufwand minimiert werden, wenn die beeinflußbare Phase über den Sanftanlasser mit der Drehstromlast verbunden ist und die beiden anderen Phasen direkt über das Schütz mit der Drehstromlast verbunden sind.

Wenn das Schütz eine Schützbaubreite aufweist, der Sanftanlasser eine Sanftanlasserbaubreite aufweist und die Schützbaubreite mindestens so groß ist wie die Sanftanlasserbaubreite, ragt der Sanftanlasser seitlich nicht über das Schütz hinaus.

Wenn das Schütz eine Schützbauhöhe aufweist, der Sanftanlasser eine Sanftanlasserbauhöhe aufweist und die Schützbauhöhe größer ist als die Sanftanlasserbauhöhe, ist ein einfaches Anschließen von Leitungen an das Schütz auch bei aufmontierten Sanftanlasser möglich.

Weitere Vorteile und Einzelheiten ergeben sich aus der nachfolgenden Beschreibung eines Ausführungsbeispiels. Dabei zeigen in Prinzipdarstellung
- FIG 1: ein an einem Halteelement befestigtes Schütz,
- FIG 2: einen Sanftanlasser,
- FIG 3: eine Kombination eines Schützes mit einem Sanftanlasser und
- FIG 4: ein Blockschaltbild eines Motorabzweiges.

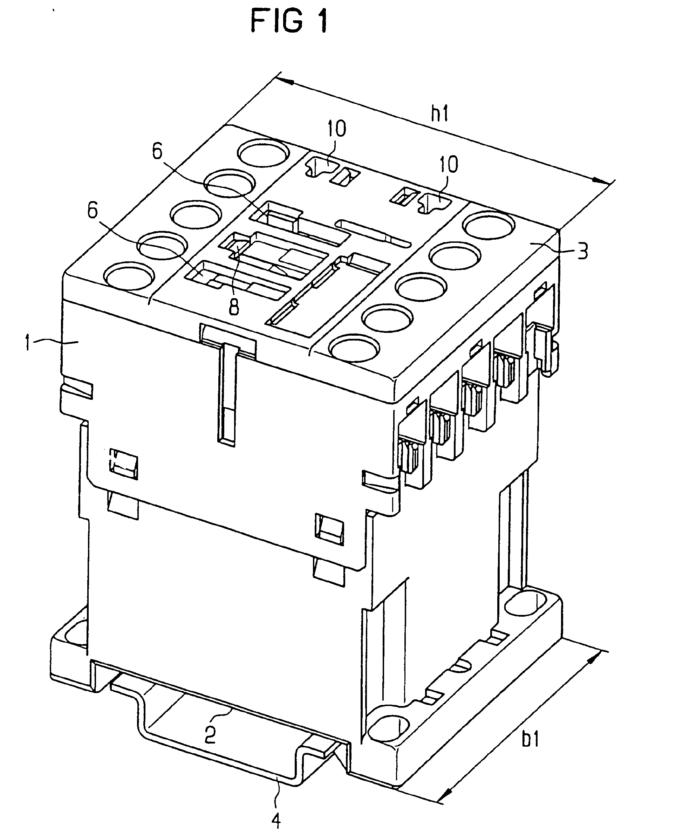

Gemäß FIG 1 weist ein Schütz 1 eine Montageseite 2 und eine Bedienseite 3 auf. Die Bedienseite 3 liegt der Montageseite 2 gegenüber. Mit der Montageseite 2 ist das Schütz an einem Halteelement 4, hier einer Tragschiene 4, befestigbar. Das Schütz 1 weist eine Schützbaubreite b1 und eine Schützbauhöhe h1 auf.

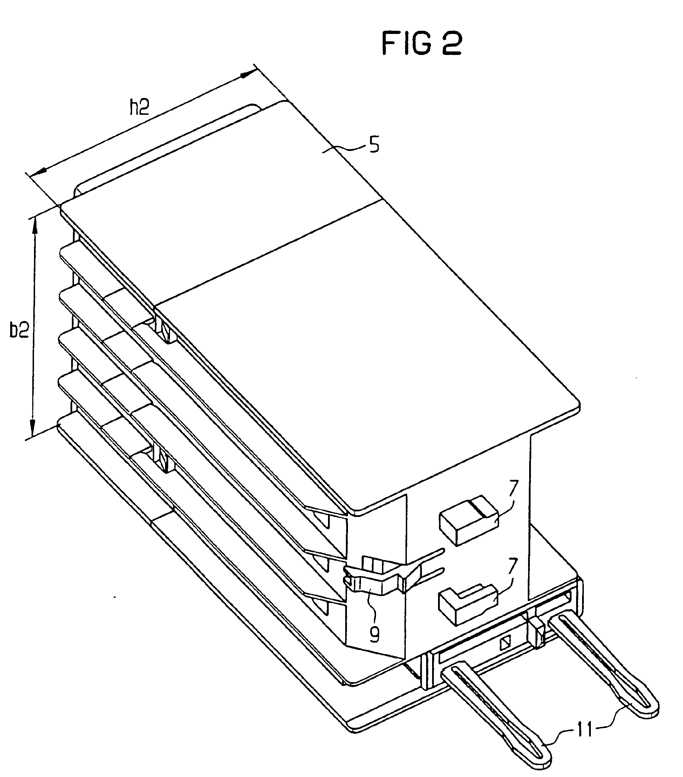

Gemäß FIG 2 weist ein Sanftanlasser 5 eine Sanftanlasserbaubreite b2 und eine Sanftanlasserbauhöhe h2 auf.

Gemäß den FIG 1 und 2 weisen das Schütz 1 und der Sanftanlasser 5 zusammenwirkende Hakelemente 6, 7 auf. Mittels der Hakelemente 6, 7 wird der Sanftanlasser 5 im aufmontierten Zustand an dem Schütz 1 gehalten. Das Schütz 1 und der Sanftanlasser 5 weisen ferner zusammenwirkende Rastelemente 8, 9 auf. Durch Einhaken und selbständiges Verrasten ist somit der Sanftanlasser 5 ohne Werkzeug auf die Bedienseite 3 des Schützes 1 aufmontierbar. Bei Betätigung des sanftanlasserseitigen Rastelements 9 - z. B. durch Fingerbetätigung oder Ansetzen einer Schraubendreherklinge - ist der Sanftanlasser 5 wieder vom Schütz 1 lösbar.

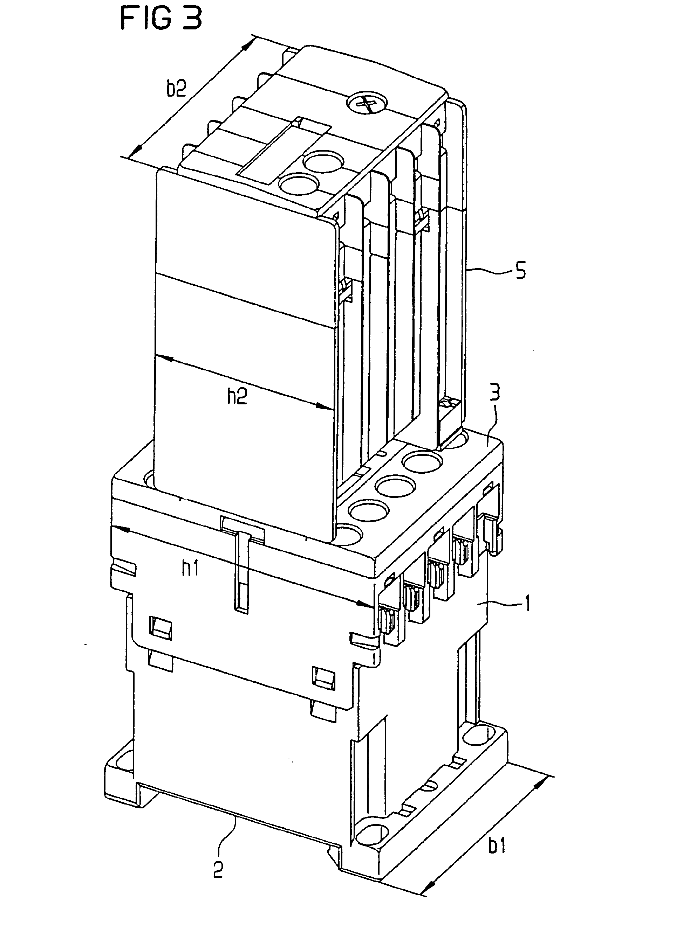

Eine Kombination des Schützes 1 mit dem Sanftanlasser 5, bei der der Sanftanlasser 5 auf das Schütz 1 aufmontiert ist, ist aus FIG 3 ersichtlich. Gemäß FIG 3 ist der Sanftanlasser 5 auf der Bedienseite 3 des Schützes 1 angeordnet. Ersichtlich ist die Schützbauhöhe h1 größer als die Sanftanlasserbauhöhe h2. Ferner ist ersichtlich, daß die Schützbaubreite b1 mindestens so groß ist wie die Sanftanlasserbaubreite b2.

Das Schütz 1 und der Sanftanlasser 5 weisen gemäß den FIG 1 und 2 zusammenwirkende Versorgungskontaktelemente 10, 11 auf. Mittels der Versorgungskontaktelemente 10, 11 ist der Sanftanlasser 5 über das Schütz 1 mit elektrischer Energie versorgbar.

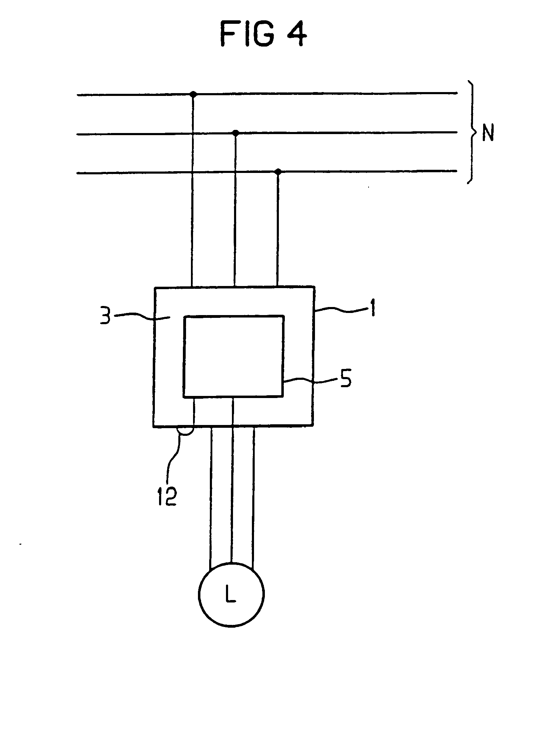

Gemäß FIG 4 schaltet das Schütz 1 ein dreiphasiges Drehstromnetz N an eine Drehstromlast L an. Der Sanftanlasser 5 ist als einphasiger Sanftanlasser 5 ausgebildet. Er kann also nur eine Phase des Drehstromnetzes N beeinflussen. Gemäß FIG 4 ist nur die beeinflußbare Phase über den Sanftanlasser 5 mit der Drehstromlast L verbunden. Die beiden anderen Phasen sind direkt über das Schütz 1 mit der Drehstromlast L verbunden. Dadurch müssen weniger Leitungen als im Stand der Technik verlegt werden.

Gemäß FIG 4 ist die beeinflußbare Phase über eine Verbindungsleitung 12 vom Schütz 1 zum Sanftanlasser 5 geführt. Auch diese Verbindungsleitung 12 könnte gegebenenfalls noch eingespart werden, wenn das Schütz 1 und der Sanftanlasser 5 zusammenwirkende Lastkontaktelemente aufweisen, mittels derer eine Laststromleitung für die beeinflußbare Phase von dem Schütz 1 zum Sanftanlasser 5 geschlossen wird. Bei mehreren beeinflußbaren Phasen müssen in diesem Fall selbstverständlich für jede beeinflußbare Phase zusammenwirkende Lastkontaktelemente vorhanden sein.

## Patentansprüche

1. Kombination eines Schützes (1) mit einem Sanftanlasser (5),
**dadurch gekennzeichnet,**
**daß** der Sanftanlasser (5) auf das Schütz (1) aufmontiert ist.

2. Kombination nach Anspruch 1,
**dadurch gekennzeichnet,**
**daß** das Schütz (1) eine Montageseite (2) und eine der Montageseite (2) gegenüberliegende Bedienseite (3) aufweist, daß das Schütz (1) mit der Montageseite (2) an einem Halteelement (4) befestigbar ist und daß der Sanftanlasser (5) auf der Bedienseite (3) des Schützes (1) angeordnet ist.

3. Kombination nach Anspruch 1 oder 2,
**dadurch gekennzeichnet,**
**daß** das Schütz (1) und der Sanftanlasser (5) zusammenwirkende Hakelemente (6, 7) aufweisen, mittels derer der Sanftanlasser (5) an dem Schütz (1) gehalten ist.

4. Kombination nach Anspruch 1, 2 oder 3,
**dadurch gekennzeichnet,**
**daß** das Schütz (1) und der Sanftanlasser (5) zusammenwirkende Rastelemente (8, 9) aufweisen, bei deren Betätigung der Sanftanlasser (5) von dem Schütz (1) lösbar ist.

5. Kombination nach einem der obigen Ansprüche,
**dadurch gekennzeichnet,**
**daß** das Schütz (1) und der Sanftanlasser (5) zusammenwirkende Versorgungskontaktelemente (10, 11) aufweisen, mittels derer der Sanftanlasser (5) über das Schütz (1) mit elektrischer Energie versorgbar ist.

6. Kombination nach einem der obigen Ansprüche,
**dadurch gekennzeichnet,**
**daß** das Schütz (1) und der Sanftanlasser (5) zusammenwirkende Lastkontaktelemente aufweisen, mittels derer mindestens eine Laststromleitung von dem Schütz (1) zum Sanftanlasser (5) geschlossen wird.

7. Kombination nach einem der Ansprüche 1 bis 5,
**dadurch gekennzeichnet,**
**daß** das Schütz (1) ein dreiphasiges Drehstromnetz (N) an eine Drehstromlast (L) anschaltet, daß der Sanftanlasser (5) als einphasiger Sanftanlasser (5) ausgebildet ist, mittels dessen nur eine Phase des Drehstromnetzes (N) beeinflußbar ist, daß die beeinflußbare Phase über den Sanftanlasser (5) mit der Drehstromlast (L) verbunden ist und daß die beiden anderen Phasen direkt über das Schütz (1) mit der Drehstromlast (L) verbunden sind.

8. Kombination nach einem der obigen Ansprüche,
**dadurch gekennzeichnet,**
**daß** das Schütz (1) eine Schützbaubreite (b1) aufweist, daß der Sanftanlasser (5) eine Sanftanlasserbaubreite (b2) aufweist und daß die Schützbaubreite (b1) mindestens so groß ist wie die Sanftanlasserbaubreite (b2).

9. Kombination nach einem der obigen Ansprüche,
**dadurch gekennzeichnet,**
**daß** das Schütz (1) eine Schützbauhöhe (h1) aufweist, daß der Sanftanlasser (5) eine Sanftanlasserbauhöhe (h2) aufweist und
**daß** die Schützbauhöhe (h1) größer ist als die Sanftanlasserbauhöhe (h2).

## Claims

1. Combination of a contactor (1) and a soft starter (5),
**characterized**
**in that** the soft starter (5) is mounted on the contactor (1).

2. Combination according to Claim 1,
**characterized**
**in that** the contactor (1) has a mounting face (2) and an operating face (3) which is opposite the mounting face (2), in that the contactor (1) can be mounted by the mounting face (2) on a holding element (4), and in that the soft starter (5) is arranged on the operating face (3) of the contactor (1).

3. Combination according to Claim 1 or 2,
**characterized**
**in that** the contactor (1) and the soft starter (5) have interacting hook elements (6, 7) by means of which the soft starter (5) is held on the contactor (1).

4. Combination according to Claim 1, 2 or 3,
**characterized**
**in that** the contactor (1) and the soft starter (5) have interacting latching elements (8, 9) which, when operated, allow the soft starter (5) to be detached from the contactor (1) .

5. Combination according to one of the preceding claims,
**characterized**
**in that** the contactor (1) and the soft starter (5) have interacting supply contact elements (10, 11), by means of which the soft starter (5) can be supplied with electrical power via the contactor (1).

6. Combination according to one of the preceding claims,
**characterized**
**in that** the contactor (1) and the soft starter (5) have interacting load contact elements, by means of which at least one load current cable is connected from the contactor (1) to the soft starter (5).

7. Combination according to one of claims 1 to 5,
**characterized**
**in that** the contactor (1) connects a three-phase power supply system (N) to a three-phase load (L), in that the soft starter (5) is in the form of a single-phase soft starter (5) by means of which only one phase of the three-phase power supply system (N) can be influenced, in that that phase which can be influenced is connected via the soft starter (5) to the three-phase load (L), and in that the two other phases are connected directly via the contactor (1) to the three-phase load (L).

8. Combination according to one of the preceding claims,
**characterized**
**in that** the contactor (1) has a physical contactor width (b1),
**in that** the soft starter (5) has a physical soft starter width (b2), and in that the physical contactor width (b1) is at least as great as the physical soft starter width (b2).

9. Combination according to one of the preceding claims,
**characterized**
**in that** the contactor (1) has a physical contactor height (h1),
**in that** the soft starter (5) has a physical soft starter height (h2), and in that the physical contactor height (h1) is greater than the physical soft starter height (h2).

## Revendications

1. Combinaison d'un contacteur-disjoncteur (1) et d'un démarreur pour démarrage en douceur (5)
**caractérisée en ce que**
le démarreur pour démarrage en douceur (5) est monté sur le contacteur-disjoncteur (1).

2. Combinaison selon la revendication 1,
**caractérisée en ce que**
le contacteur-disjoncteur (1) présente un côté montage (2) et un côté commande (3) opposé au côté montage (2), **en ce que** le contacteur-disjoncteur (1) peut être fixé par le côté montage (2) sur un élément de retenue (4), et **en ce que** le démarreur pour démarrage en douceur (5) est disposé du côté commande (3) du contacteur-disjoncteur (1).

3. Combinaison selon la revendication 1 ou 2,
**caractérisée en ce que**
le contacteur-disjoncteur (1) et le démarreur pour démarrage en douceur (5) présentent des éléments d'accrochage (6, 7), qui coopèrent et au moyen desquels le démarreur pour démarrage en douceur (5) est retenu sur le contacteur-disjoncteur (1).

4. Combinaison selon la revendication 1, 2 ou 3
**caractérisée en ce que**
le contacteur-disjoncteur (1) et le démarreur pour démarrage en douceur (5) présentent des éléments d'encliquetage (8, 9), qui coopèrent et lors de l'actionnement desquels le démarreur pour démarrage en douceur (5) peut être détaché du contacteur-disjoncteur (1).

5. Combinaison selon l'une des revendications ci-dessus,
**caractérisée en ce que**
le contacteur-disjoncteur (1) et le démarreur pour démarrage en douceur (5) présentent des éléments de contact d'alimentation (10, 11), qui coopèrent et au moyen desquels le démarreur pour démarrage en douceur (5) peut être alimenté en énergie électrique par le biais du contacteur-disjoncteur (1).

6. Combinaison selon l'une des revendications ci-dessus,
**caractérisée en ce que**
le contacteur-disjoncteur (1) et le démarreur pour démarrage en douceur (5) présentent des éléments de contact de charge, qui coopèrent et au moyen desquels au moins une ligne de courant de charge reliant le contacteur-disjoncteur (1) au démarreur pour démarrage en douceur (5) est fermée.

7. Combinaison selon l'une des revendications 1 à 5,
**caractérisée en ce que**
le contacteur-disjoncteur (1) relie un réseau de courant triphasé (N) à une charge de courant triphasé (L), **en ce que** le démarreur pour démarrage en douceur (5) est constitué en tant que démarreur pour démarrage en douceur (5) monophasé, au moyen duquel une seule phase du réseau de courant triphasé (N) peut être influencée, **en ce que** la phase pouvant être influencée est connectée à la charge de courant triphasé (L) par le biais du démarreur pour démarrage en douceur (5), et **en ce que** les deux autres phases sont connectées à la charge de courant triphasé (L) directement par le biais du contacteur-disjoncteur (1).

8. Combinaison selon l'une des revendications ci-dessus,
**caractérisée en ce que**
le contacteur-disjoncteur (1) présente une largeur de construction de contacteur-disjoncteur (b1), **en ce que** le démarreur pour démarrage en douceur (5) présente une largeur de construction de démarreur pour démarrage en douceur (b2), et **en ce que** la largeur de construction de contacteur-disjoncteur (b1) est au moins aussi grande que la largeur de construction de démarreur pour démarrage en douceur (b2).

9. Combinaison selon l'une des revendications ci-dessus,
**caractérisée en ce que**
le contacteur-disjoncteur (1) présente une hauteur de construction de contacteur-disjoncteur (h1), **en ce que** le démarreur pour démarrage en douceur (5) présente une hauteur de construction de démarreur pour démarrage en douceur (h2), et **en ce que** la hauteur de construction de contacteur-disjoncteur (h1) est plus grande que la hauteur de construction de démarreur pour démarrage en douceur (h2).
